# EUROPEAN PATENT SPECIFICATION

(11) **EP 4 398 433 B1**
(45) Date of publication and mention of the grant of the patent: **14.01.2026**
(21) Application number: 22863102.4
(22) Date of filing: 15.08.2022
(51) Int. Cl.: H02H 9/00, B60L 3/04, B60L 53/62, H02H 9/02, H02J 7/00, B60L 53/60, H01H 47/00

(54) **CIRCUIT AND METHOD FOR SUPPRESSING POWER SUPPLY STARTING SURGE, CHARGING APPARATUS, AND STORAGE MEDIUM**
SCHALTUNG UND VERFAHREN ZUR UNTERDRÜCKUNG DES STROMVERSORGUNGSSTARTANSTIEGS, LADEVORRICHTUNG UND SPEICHERMEDIUM
CIRCUIT ET PROCÉDÉ PERMETTANT DE SUPPRIMER UNE SURTENSION DE DÉMARRAGE D'ALIMENTATION ÉLECTRIQUE, APPAREIL DE CHARGE ET SUPPORT DE STOCKAGE

(30) Priority: 31.08.2021 CN 202111014899
(43) Date of publication of application: 10.07.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/112468
(87) International publication number: WO 2023/029962

(56) References cited:
- CN-A- 108 599 543
- CN-A- 113 765 080
- CN-U- 201 439 976
- CN-U- 202 035 203
- CN-U- 206 498 237
- JP-A- 2002 281 745
- JP-A- H 099 497
- JP-B2- 4 318 662

## Description

### TECHNICAL FIELD

The present disclosure relates to the technical field of electric power, in particular to a circuit, a method for suppressing a power supply starting surge, a charging apparatus, and a storage medium.

### BACKGROUND

The safety of high-current power supply modules has attracted more attention, with the popularization of high-current charging technology for electric vehicles. In the power supply circuit of the existing high-current power supply module, the relay is completely controlled by the hardware control circuit consisting of various components, the relay cannot work properly due to damages to any component in the hardware control circuit, which thus may lead to damages to the power supply module or other components. Moreover, a high surge current is generated when a switch is powered on. Therefore, a circuit structure, which prevents a surge current, needs to be provided at an input terminal of the power supply. A protection circuit and power supply device are known from the prior art, for example from JP4318662B2. A power supply device is known from the prior art, for example from JP2002281745A.

Therefore, how to avoid direct damages to the power supply module or other components due to relay failure and how to suppress the surge current have become problems to be urgently solved by those skilled in the art.

### SUMMARY

The present invention is defined by the independent claims. Further embodiments are set forth in the dependent claims. Any references to inventions or embodiments not falling within the scope of the independent claims are to be interpreted as examples useful for understanding the invention. An embodiment of the present disclosure provides a circuit for suppressing a power supply starting surge to solve the technical problem that in the existing power supply circuit, the relay is completely controlled by the hardware circuit, and the relay cannot function properly due to damages to any component in the hardware control circuit. The circuit for suppressing a power supply starting surge includes: a power supply module, a relay and a variable resistance, and the relay is connected in parallel to the variable resistance and then connected between an external power supply and the power supply module.

Further, the circuit for suppressing a power supply starting surge in the embodiment of the present invention further includes: a voltage detection module and a microcontroller, in which an input terminal of the voltage detection module is connected to an output terminal of the power supply module for detecting an output voltage of the power supply module; an input terminal of the microcontroller is connected to an output terminal of the voltage detection module, and the microcontroller is configured to control whether to activate the relay based on a detection result of the voltage detection module, thereby controlling whether the variable resistance is connected to a power supply circuit from the external power supply to the power supply module.

Furthermore, the circuit for suppressing a power supply starting surge in the embodiment of the present invention further includes a transistor, of which an input terminal is connected to an output terminal of the microcontroller, and of which an output terminal is connected to an input terminal of the relay, in which the microcontroller is configured to control turn-on and turn-off of the transistor according to the detection result of the voltage detection module, thereby controlling whether to activate the relay and whether the variable resistance is connected to the power supply circuit from the external power supply to the power supply module.

Furthermore, the microcontroller is configured to: control the transistor to be turned on, drive the relay to be turned on, and short-circuit the variable resistance, so that the power supply module outputs a voltage of the external power supply at full power, in a case where the output voltage of the power supply module is higher than a reference voltage; and control the transistor to be turned off, and drive the relay to be turned off, so that an input voltage of the external power supply is input to the power supply module through the variable resistance, in a case where an output voltage of the power supply module is lower than the reference voltage.

An embodiment of the present invention also provides a charging apparatus to solve the technical problem that in the existing power supply circuit, the relay is completely controlled by the hardware circuit, and the relay cannot function properly due to damages to any component in the hardware control circuit. The charging apparatus includes: any one of the circuits for suppressing a power supply starting surge.

An embodiment of the present invention also provides a motor vehicle, including the charging apparatus.

An embodiment of the present invention provides a method for suppressing a power supply starting surge to solve the technical problem that in the existing power supply circuit, the relay is completely controlled by the hardware circuit, the relay cannot function properly due to damages to any component in the hardware control circuit. The method for suppressing a power supply starting surge includes: detecting, by the voltage detection module, an output voltage of the power supply module; controlling, by the microcontroller, whether to activate the relay based on a detection result of the voltage detection module, and controlling whether the variable resistance is connected to a power supply circuit from the external power supply to the power supply module.

Further, the method for suppressing a power supply starting surge in the embodiment of the present disclosure further includes: controlling, by the microcontroller, turn-on and turn-off of the transistor according to the detection result of the voltage detection module, and controlling whether to activate the relay, and whether the variable resistance is connected to the power supply circuit from the external power supply to the power supply module.

Furthermore, the method for suppressing a power supply starting surge in the embodiment of the present invention further includes: controlling, by the microcontroller, the transistor to be turned on, driving the relay to be turned on, and short-circuiting the variable resistance, so that the power supply module outputs a voltage of the external power supply at full power, in a case where an output voltage of the power supply module is higher than a reference voltage; and controlling, by the microcontroller, the transistor to be turned off, and driving the relay to be turned off, so that an input voltage of the external power supply is input through the variable resistance to the power supply module, in a case where the output voltage of the power supply module is lower than the reference voltage.

An embodiment of the present disclosure also provides a computer-readable storage medium to solve the technical problem that in the existing power supply circuit, the relay is completely controlled by the hardware circuit, and the relay cannot function properly due to damages to any component in the hardware control circuit. The computer-readable storage medium stores a computer program for implementing the method for suppressing a power supply starting surge.

An embodiment of the present disclosure also provides a motor vehicle, including the charging apparatus.

The circuit, method for suppressing a power supply starting surge, the charging apparatus, the storage medium, and the motor vehicle provided in the embodiments of the present disclosure connect a variable resistance in parallel to both ends of the relay, so that a power supply starting surge current can be effectively suppressed, and the power supply module is controlled to output an appropriate power supply voltage, and thus normal operation of components in the circuit can be protected.

Further, based on a combination of software control and hardware circuits, according to the voltage detection result, turn-on and turn-off of the relay are controlled by the microcontroller and the transistor, the number of components required for relay control is reduced, and the probability that the relay does not function properly can be reduced, so as to avoid damages to the power supply module or other components in the circuit due to relay failure. Applying the circuit for suppressing a power supply starting surge provided in the embodiment of the present invention to the charging apparatus can not only suppress the surge current caused by power startup, but also improve the stability and durability of a surge protection circuit of the charging apparatus.

### BRIEF DESCRIPTION OF THE DRAWINGS

In order to more clearly demonstrate the technical solutions in the embodiments of the present disclosure or the prior art, drawings that need to be used in the description in the embodiments or the prior art will be simply introduced below. Obviously, the drawings in the description below are only some embodiments of the present disclosure, and other drawings may also be obtained by those skilled in the art based on these drawings without creative efforts.
FIG. 1 is a schematic block diagram illustrating a circuit for suppressing a power supply starting surge provided in an embodiment of the present invention;
FIG. 2 is a schematic diagram illustrating a circuit for suppressing a power supply starting surge provided in an embodiment of the present invention;
FIG. 3 is a flowchart illustrating a method for suppressing a power supply starting surge provided in an embodiment of the present invention; and
FIG. 4 is a flowchart illustrating an alternative method for suppressing a power supply starting surge provided in an embodiment of the present invention.

### DETAILED OF THE EMBODIMENTS

In order to more clearly describe the objective, technical solutions and advantages in the embodiments of the present disclosure, the drawings to be used in the description of the embodiments will be introduced in further detail below. The schematic embodiments and descriptions of the present disclosure are used herein to demonstrate the present disclosure, but are not intended to be a limitation of the present disclosure.

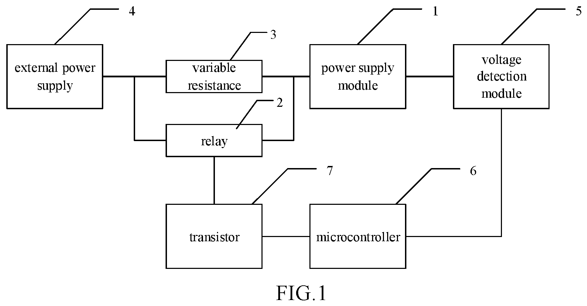

An embodiment of the present disclosure provides a circuit for suppressing a power supply starting surge. FIG. 1 is a schematic diagram illustrating a circuit for suppressing a power supply starting surge provided in an embodiment of the present invention. As illustrated in FIG. 1, the circuit for suppressing a power supply starting surge includes: a power supply module 1, a relay 2 and a variable resistance 3. The relay 2 is connected in parallel to the variable resistance 3 and then connected between an external power supply 4 and the power supply module 1.

It should be noted that in the circuit for suppressing a power supply starting surge provided in the embodiment of the present disclosure, the circuit can have different startup instantaneous impulse currents (surge suppression value) and surge duration by setting a resistance value of the variable resistance 3. In an embodiment, a resistance adjustment range of the variable resistance is 3Ω-20Ω. In an embodiment, if the resistance adjustment range of the variable resistance is 3Ω-20Ω, the startup instantaneous impulse currents of the circuit can be less than or equal to 73A. More preferably, the resistance adjustment range of the variable resistance is 5Ω-10Ω. In an embodiment, if the resistance adjustment range of the variable resistance is 5Ω-10Ω, the startup instantaneous impulse currents of the circuit can be less than or equal to 44A, and the surge duration of the circuit can be less than or equal to 4s. Surge protection can be achieved by limiting the power supply starting surge current value and duration within a certain range. More specifically, as can be seen, the present disclosure does not limit the resistance value of the variable resistance 3 in the adjustment process. In various embodiments, the resistance value of the variable resistance 3 can be 5Ω, 6Ω, 7Ω...10Ω; the corresponding surge suppression value is 44A, 36.6A, 314A...22A, that is, a product of the resistance value of the variable resistor 3 and the surge suppression value is a mains voltage of 220V

In order to realize the software control of the relay 2, in an embodiment, the circuit for suppressing a power supply starting surge in the embodiment of the present disclosure further includes: a voltage detection module 5 and a microcontroller 6; in which an input terminal of the voltage detection module 5 is connected to an output terminal of the power supply module 1 for detecting an output voltage of the power supply module 1; an input terminal of the microcontroller 6 is connected to an output terminal of the voltage detection module 5, and the microcontroller 6 is configured to control whether to activate the relay 2 based on a detection result of the voltage detection module 5, thereby controlling whether the variable resistance 3 is connected to a power supply circuit from the external power supply 4 to the power supply module 1.

Further, in order to better control the relay 2, in an embodiment, the circuit for suppressing a power supply starting surge in the embodiment of the present disclosure further includes a transistor 7, of which an input terminal is connected to an output terminal of the microcontroller 6, and of which an output terminal is connected to an input terminal of the relay 2, in which the microcontroller 6 is configured to control turn-on and turn-off of the transistor 7 according to the detection result of the voltage detection module 5, thereby controlling whether to activate the relay 2, and whether the variable resistance 3 is connected to the power supply circuit from the external power supply 4 to the power supply module 1.

It should be noted that the wording "activate" in "to activate the relay 2" in the embodiment of the present disclosure refers to driving the relay 2 to be turned on, whereas a state "being not activated" of the relay 2 can be understood that the relay 2 is in a turned-off state.

According to the voltage detection result of the voltage detection module 5, the microcontroller 6 in the embodiment of the present disclosure controls turn-on and turn-off of the relay 2 by the microcontroller 6 and the transistor 7, so as to ensure the normal operation of the relay to avoid direct damages to the power supply module and other components in the circuit.

Alternatively, the microcontroller 6 in the embodiment of the present disclosure adopts a single-chip microcomputer.

In an embodiment, the microcontroller 6 in the embodiment of the present disclosure can be configured to control the transistor 7 to be turned on, drive the relay 2 to be turned on and short-circuit the variable resistance 3, so that the power supply module 1 outputs a voltage of the external power supply 4 at full power, in a case where the output voltage of the power supply module 1 is higher than a reference voltage; control the transistor 7 to be turned off, and drive the relay 2 to be turned off, so that an input voltage of the external power supply 4 is input to the power supply module 1 through the variable resistance 3, in a case where an output voltage of the power supply module 1 is lower than the reference voltage.

In the embodiment, in the case where the output voltage of the power supply module 1 is higher than the reference voltage, it indicates that the power supply module 1 is in an operating state of charging outwards, in this case, the variable resistance 3 needs to be short-circuited, so that the power supply module 1 can output the voltage of the external power supply 4 at full power, and improve the charging efficiency of the power supply module 1; in the case where the output voltage of the power supply module 1 is lower than the reference voltage, it indicates that the power supply module 1 stops charging outwards, in this case, the variable resistance 3 needs to be connected, so that the input voltage of the external power supply 4 is input to the power supply module 1 through the variable resistance 3, so that the power supply module 1 outputs an appropriate voltage, in order to prevent various components in the power supply module 1 from being damaged.

It should be noted that the circuit for suppressing a power supply starting surge provided in the embodiment of the present disclosure can be used in various high-power output devices (including but not limited to charging apparatuss for electric vehicles) to accomplish surge protection.

Therefore, in an embodiment, the circuit for suppressing a power supply starting surge provided in the embodiment of the present disclosure can be placed at a front end of the charging apparatus, and between the external power supply and the charging apparatus, in order to protect the charging apparatus from being damaged.

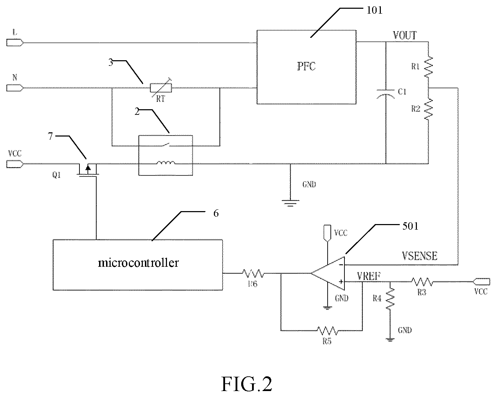

Next, referring to FIG. 2, in the circuit for suppressing a power supply starting surge according to the embodiment of the present invention, the power supply module 1 includes: a PFC module 101 and a PFC capacitor C1 for power factor correction, in which an input terminal of the voltage detection module is connected to an output terminal of the PFC module 101 for detecting an output voltage of the PFC module 101; a first terminal of the PFC capacitor C1 is connected to the output terminal of the PFC module 101, a second terminal of the PFC capacitor C1 is connected to a ground terminal GND. In the embodiment of the present disclosure, the voltage of the external power supply is corrected by the PFC module 101 and the PFC capacitor C1, the power supply efficiency of the external power supply can be improved; when the divided voltage value of the output voltage of the PFC module is higher than a set voltage value (reference voltage value) by detecting the divided voltage value of the output voltage of the PFC module, the single-chip microcomputer drives the relay to be turned on, and the PFC module starts to output voltage normally.

In an embodiment, as illustrated in FIG. 2, in the circuit for suppressing a power supply starting surge in the embodiment of the present invention, the voltage detection module 5 includes: a first resistance R1, a second resistance R2, and an operational amplifier 501, in which a first terminal of the first resistance R1 is connected to the output terminal of the PFC module, a second terminal of the first resistance R1 is connected to a first terminal of the second resistance R2, and a second terminal of the second resistance R2 is connected to a ground terminal GND; a terminal of the first resistance R1 connected to the second resistance R2 is connected to a negative input terminal of the operational amplifier 501, an output terminal of the operational amplifier 501 is connected to the microcontroller 6, and a positive input terminal of the operational amplifier 501 is connected to a reference voltage divider circuit.

Alternatively, the number of the first resistance R1 and the second resistance R2 may be one or more, in order to guarantee the accuracy of the collected voltage value

As illustrated in FIG. 2, the reference voltage divider circuit is used to provide a reference voltage (in FIG. 2, VREF refers to the reference voltage and VSENSE refers to the output voltage detected by the voltage detection module). Specifically, the reference voltage divider circuit includes: a third resistance R3 and a fourth resistance R4, in which a first terminal of the third resistance R3 is connected to a positive terminal VCC of the external power supply, a second terminal of the third resistance R3 is connected to a first terminal of the fourth resistance R4, a second terminal of the fourth resistance R4 is connected to the ground terminal, and a terminal of the third resistance R3 connected to the fourth resistance R4 is connected to the positive input terminal of the operational amplifier 501. In the embodiment of the present disclosure, the terminal of the third resistance R3 connected to the fourth resistance R4 is connected to the negative input terminal of the operational amplifier to form a voltage detection circuit.

In this embodiment, VREF=VCC×R4/(R3+R4); VSENSE=VOUT×R2/(R1+R2).

The single-chip microcomputer in the embodiment of the present disclosure is connected to the gate of the transistor, and VCC is connected to the drain of the transistor 7. In an embodiment, the single-chip microcomputer is configured such that the operational amplifier 501 outputs a high level, and the single-chip microcomputer outputs a high level; the operational amplifier 501 outputs a low level, and the single-chip microcomputer outputs a low level. Certainly, in other embodiments, the single-chip microcomputer can be configured such that the operational amplifier 501 outputs a high level, and the single-chip microcomputer outputs a low level; the operational amplifier 501 outputs a low level, and the single-chip microcomputer outputs a high level.

When VSENSE<VREF, the operational amplifier 501 outputs a high level, the single-chip microcomputer outputs a high level, the transistor is turned off, and the relay 2 is turned off; when VSENSE>VREF, when the operational amplifier 501 outputs a low level, the single-chip microcomputer outputs a low level, the transistor 7 is turned on and the relay 2 is turned on. That is, when the operational amplifier 501 outputs a high level, the relay 2 is turned off, and the PFC capacitor is charged through RT at the input voltage, so that the surge current is inversely proportional to the RT1 resistance, the RT with an appropriate resistance value can be chosen and the surge current can be controlled within an acceptable range; when the operational amplifier 501 outputs a low level, the relay 2 is turned on, and an impedance of a large current path can be reduced by short-circuiting the RT1, and the power system can achieve output at full power.

Further, a fifth resistance R5 is connected between the positive input terminal and the output terminal of the operational amplifier 501, and a sixth resistance R6 is connected between the output terminal of the operational amplifier 501 and the microprocessor 3, in which the fifth resistance R5 is a feedback resistance connected between an output pin of the operational amplifier 501 and a forward pin, which can eliminate zero drift; and the sixth resistance R6 can prevent the outputs from short-circuiting, in order to protect the operational amplifier 501.

In an embodiment, the transistor 7 of the present invention can be a field effect transistor, in which a gate of the field effect transistor is connected to the microcontroller, and a drain of the field effect transistor is connected to the positive terminal of the external power supply, and the source of the field effect transistor is connected to the relay. The field effect transistor has advantages such as high input resistance, low noise, low power consumption, large dynamic range, easy integration, no secondary breakdown phenomenon, and wide safe working area.

In another embodiment, the transistor 7 of the present invention may be a triode, in which a base of the triode is connected to the microcontroller, and a collector of the triode is connected to the positive terminal of the external power supply, and an emitter of the triode is connected to the relay. The triode has a current amplification effect that the triode can control a great change in the collector current with a small change in the base current in essence.

It should be noted that the field effect transistor and the triode in the embodiment of the present disclosure can be replaced without changing the wiring method, and the specific parameters are selected according to the relay 2.

Based on the same inventive concept, an embodiment of the present invention also provides a charging apparatus. The charging apparatus includes a circuit for suppressing a power supply starting surge according to any one of the above claims. Since the charging apparatus solves the problem on a similar principle to that of the circuit for suppressing a power supply starting surge, refer to the implementation of the circuit for suppressing a power supply starting surge for the implementation of the charging apparatus, where repetitions will not be described here anymore.

It should be noted that the charging apparatus provided in the embodiment of the present disclosure refers to a high-power charging apparatus, which may be but not limited to a charging apparatus for an electric vehicle.

Based on the same inventive concept, an embodiment of the present invention also provides a method for suppressing a power supply starting surge, as mentioned in the embodiment below. Since this method solves the problem on a similar principle to that of the circuit for suppressing a power supply starting surge, refer to the implementation of the circuit for suppressing a power supply starting surge for the implementation of this method, where repetitions will not be described here anymore.

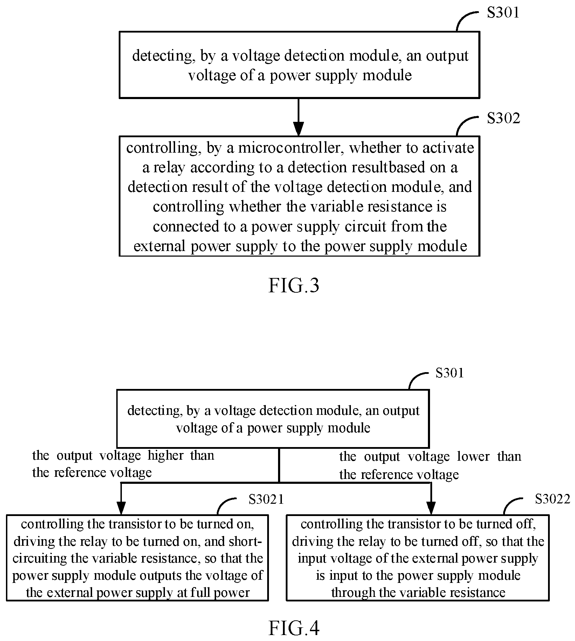

FIG. 3 is a flowchart illustrating a method for suppressing a power supply starting surge provided in an embodiment of the present invention. As illustrated in FIG. 3, the method includes the steps of:
S301, detecting, by a voltage detection module, an output voltage of a power supply module; and
S302, controlling, by a microcontroller, whether to activate a relay based on a detection result of the voltage detection module, and controlling whether the variable resistance is connected to a power supply circuit from the external power supply to the power supply module.

In an embodiment, the S302 can control, by the microcontroller, turn-on and turn-off of the transistor according to the detection result of the voltage detection module, thereby controlling whether to activate the relay, and whether the variable resistance is connected to a power supply circuit from the external power supply to the power supply module.

Further, in an embodiment, as illustrated in FIG. 4, the S302 can be specifically implemented in the steps as follows:
S3021, controlling the transistor to be turned on, driving the relay to be turned on, and short-circuiting the variable resistance, so that the power supply module outputs the voltage of the external power supply at full power, in a case where the output voltage of the power supply module is higher than the reference voltage; and
S3022, controlling the transistor to be turned off, driving the relay to be turned off, so that the input voltage of the external power supply is input to the power supply module through the variable resistance, in a case where the output voltage of the power supply module is lower than the reference voltage.

Based on the same inventive concept, an embodiment of the present disclosure also provides a computer-readable storage medium to solve the technical problem that in the existing power supply circuit, the relay is completely controlled by the hardware circuit, and the relay cannot function properly due to damages to any component in the hardware control circuit. The computer-readable storage medium stores a computer program for implementing the method for suppressing a power supply starting surge.

Based on the same inventive concept, an embodiment of the present disclosure also provides a motor vehicle, including the charging apparatus in the embodiment.

To sum up, the circuit, method for suppressing a power supply starting surge, the charging apparatus and the storage medium provided in the embodiments of the present disclosure connect the variable resistance in parallel to both ends of the relay, so that a power supply starting surge can be effectively suppressed, the power supply module is controlled to output an appropriate power supply voltage, and normal operation of components in the circuit can be protected.

Further, based on a combination of software control and hardware circuits, according to the voltage detection result, turn-on and turn-off of the relay are controlled by the microcontroller and transistor, the number of components required for relay control is reduced, and the probability that the relay does not function properly can be reduced, so as to avoid damages to the power supply module or other components in the circuit due to relay failure. Applying the circuit for suppressing a power supply starting surge provided in the embodiment of the present disclosure to the charging apparatus can improve the stability and durability of a surge protection circuit of the charging apparatus.

Those skilled in the art shall understand that the embodiments of the present invention may be provided as a method, a system, or a computer program product. Accordingly, the present disclosure can take the form of an embodiment of hardware alone, an embodiment of software alone, or an embodiment combining software with hardware. Further, the present disclosure may take the form of a computer program product embodied on one or more computer-usable storage media (including but not limited to a magnetic-disk memory, a CD-ROM, an optical memory) having a computer-usable program code.

The present disclosure is described with reference to a flowchart and/or a block diagram of method, device (system), and computer program product according to embodiments of the present disclosure. It should be understood that each procedure and/or block in the flowchart and/or block diagram, and a combination of procedures and/or blocks in the flowchart and/or block diagram can be realized by computer program instructions. These computer program instructions may be provided to a general-purpose computer, a special-purpose computer, an embedded processor, or a processor of other programmable data processing equipment to produce a machine such that the instructions executed by the computer or the processor of other programmable data processing equipment produce a device for realizing the functions specified in one or more procedures of the flowchart and/or one or more blocks of the block diagram.

These computer program instructions may also be stored in a computer-readable memory capable of directing a computer or other programmable data processing equipment to function in a specific manner, such that the instructions stored in the computer-readable memory produce an article of manufacture including an instruction device that realizes functions specified in one or more procedures of the flowchart and/or one or more blocks of the block diagram.

These computer program instructions can also be loaded onto a computer or other programmable data processing equipment, such that a series of operational steps are performed on the computer or other programmable equipment to produce a computer-implemented process, thus the instructions executed on the computer or other programmable equipment provide steps for implementing the functions specified in one or more procedures of the flowchart and/or one or more blocks of the block diagram.

The embodiments described above have further described the objective, technical solutions and advantageous effects of the present disclosure in detail. It should be understood that those described above are just the embodiments of the present disclosure, rather than limitations thereto.

## Claims

1. A circuit for suppressing a power supply starting surge, including: a power supply module (1), a relay (2), a variable resistance (3), a voltage detection module (5) and a microcontroller (6), wherein the relay (2) is connected in parallel to the variable resistance (3) and then connected between an external power supply (4) and the power supply module (1), wherein an input terminal of the voltage detection module (5) is connected to an output terminal of the power supply module (1) for detecting an output voltage of the power supply module (1); an input terminal of the microcontroller (6) is connected to an output terminal of the voltage detection module (5), and the microcontroller (6) is configured to control whether to activate the relay (2) based on a detection result of the voltage detection module (5), thereby controlling whether the variable resistance (3) is connected to a power supply circuit from the external power supply (4) to the power supply module (1),
wherein the power supply module (1) includes: a PFC module (101) and a PFC capacitor (C1) for power factor correction, in which an input terminal of the voltage detection module (5) is connected to an output terminal of the PFC module (101) for detecting an output voltage of the PFC module (101); a first terminal of the PFC capacitor (C1) is connected to the output terminal of the PFC module (101), and a second terminal of the PFC capacitor (C1) is connected to a ground terminal (GND), **characterized in that** the voltage detection module (5) includes: a first resistance (R1), a second resistance (R2), and an operational amplifier (501), in which a first terminal of the first resistance (R1) is connected to the output terminal of the PFC module (101), a second terminal of the first resistance (R1) is connected to a first terminal of the second resistance (R2), and a second terminal of the second resistance (R2) is connected to the ground terminal (GND); a terminal of the first resistance (R1) connected to the second resistance (R2) is connected to a negative input terminal of the operational amplifier (501), an output terminal of the operational amplifier (501) is connected to the microcontroller (6), wherein VSENSE=VOUT×R2/(R1+R2), where VSENSE is an output voltage detected by the voltage detection module (5), VOUT is the output voltage of the PFC module (101), R1 and R2 are resistance value of the first resistance (R1) and the second resistance (R2),
wherein a fifth resistance (R5) is connected between the positive input terminal and the output terminal of the operational amplifier (501), and a sixth resistance (R6) is connected between the output terminal of the operational amplifier (501) and the microcontroller (6),
, a positive input terminal of the operational amplifier (501) is connected to a reference voltage divider circuit, in which the reference voltage divider circuit is used to provide a reference voltage,
the reference voltage divider circuit includes: a third resistance (R3) and a fourth resistance (R4), in which a first terminal of the third resistance (R3) is connected to a positive terminal of the external power supply (4), a second terminal of the third resistance (R3) is connected to a first terminal of the fourth resistance (R4), a second terminal of the fourth resistance (R4) is connected to the ground terminal (GND), and a terminal of the third resistance (R3) connected to the fourth resistance (R4) is connected to the positive input terminal of the operational amplifier (501), wherein VREF=VCC×R4/(R3+R4), where VREF is the reference voltage, VCC is a positive terminal voltage of the external power supply (4), R3 and R4 are resistance value of the third resistance (R3) and the fourth resistance (R4).

2. The circuit for suppressing a power supply starting surge according to claim 1, further including: a transistor (7), of which an input terminal is connected to an output terminal of the microcontroller (6), and of which an output terminal is connected to an input terminal of the relay (2), wherein the microcontroller (6) is configured to control turn-on and turn-off of the transistor (7) based on the detection result of the voltage detection module (5), thereby controlling whether to activate the relay (2) and whether the variable resistance (3) is connected to the power supply circuit from the external power supply (4) to the power supply module (1).

3. The circuit for suppressing a power supply starting surge according to claim 2, wherein the microcontroller (6) is configured to: control the transistor (7) to be turned on, drive the relay (2) to be turned on, and short-circuit the variable resistance (3), so that the power supply module (1) outputs a voltage of the external power supply (4) at full power, in a case where the output voltage of the power supply module (1) is higher than a reference voltage; and control the transistor (7) to be turned off and drive the relay (2) to be turned off, so that an input voltage of the external power supply (4) is input to the power supply module (1) through the variable resistance (3), in a case where the output voltage of the power supply module (1) is lower than the reference voltage.

4. The circuit for suppressing a power supply starting surge according to claim 2, wherein the transistor (7) is a triode, in which a base of the triode is connected to the microcontroller (6), and a collector of the triode is connected to the positive terminal of the external power supply (4), and an emitter of the triode is connected to the relay (2).

5. The circuit for suppressing a power supply starting surge according to claim 2, wherein the transistor (7) is a field effect transistor, in which a gate of the field effect transistor is connected to the microcontroller (6), and a drain of the field effect transistor is connected to the positive terminal of the external power supply (4), and a source of the field effect transistor is connected to the relay (2).

6. The circuit for suppressing a power supply starting surge according to any one of claims 2 to 5, wherein the microcontroller (6) is a single-chip microcomputer.

7. The circuit for suppressing a power supply starting surge according to claim 1, wherein the resistance adjustment range of the variable resistance (3) is 5Ω-10Ω;
a surge suppression value of the circuit is varied by adjusting the variable resistance (3), and the surge suppression value is less than or equal to 44A;
a surge duration of the circuit is less than or equal to 4s.

8. A charging apparatus, including: a circuit for suppressing a power supply starting surge according to any one of claims 1 to 7.

9. A method for suppressing a power supply starting surge applied to the circuit for suppressing a power supply starting surge according to any one of claims 2 to 7, including: detecting, by the voltage detection module (5), an output voltage of the power supply module (1); controlling, by the microcontroller (6), whether to activate the relay (2) based on a detection result of the voltage detection module (5), and controlling whether the variable resistance (3) is connected to a power supply circuit from the external power supply (4) to the power supply module (1).

10. The method for suppressing a power supply starting surge according to claim 9, further including: controlling, by the microcontroller (6), turn-on and turn-off of the transistor (7) according to the detection result of the voltage detection module (5), and controlling whether to activate the relay (2), and whether the variable resistance (3) is connected to the power supply circuit from the external power supply (4) to the power supply module (1).

11. The method for suppressing a power supply starting surge according to claim 10, further including: controlling, by the microcontroller (6), the transistor (7) to be turned on, driving the relay (2) to be turned on, and short-circuiting the variable resistance (3), so that the power supply module (1) outputs a voltage of the external power supply (4) at full power, in a case where an output voltage of the power supply module (1) is higher than a reference voltage; and controlling, by the microcontroller (6), the transistor (7) to be turned off and driving the relay (2) to be turned off, so that an input voltage of the external power supply (4) is input through the variable resistance (3) to the power supply module (1), in a case where the output voltage of the power supply module (1) is lower than the reference voltage.

## Patentansprüche

1. Schaltung zum Unterdrücken eines Einschaltstromstoßes einer Stromversorgung, mit: einem Stromversorgungsmodul (1), einem Relais (2), einem variablen Widerstand (3), einem Spannungserfassungsmodul (5) und einem Mikrocontroller (6), wobei das Relais (2) parallel zum variablen Widerstand (3) geschaltet und dann zwischen eine externen Stromversorgung (4) und das Stromversorgungsmodul (1) geschaltet ist, wobei ein Eingangsanschluss des Spannungserfassungsmoduls (5) mit einem Ausgangsanschluss des Stromversorgungsmoduls (1) verbunden ist, um eine Ausgangsspannung des Stromversorgungsmoduls (1) zu erfassen; ein Eingangsanschluss des Mikrocontrollers (6) mit einem Ausgangsanschluss des Spannungserfassungsmoduls (5) verbunden ist und der Mikrocontroller (6) konfiguriert ist, um auf der Grundlage eines Erfassungsergebnisses des Spannungserfassungsmoduls (5) zu steuern, ob das Relais (2) aktiviert wird, wodurch gesteuert wird, ob der variable Widerstand (3) mit einem Stromversorgungskreis von der externen Stromversorgung (4) zum Stromversorgungsmodul (1) verbunden wird,
wobei das Stromversorgungsmodul (1) umfasst: ein PFC-Modul (101) und einen PFC-Kondensator (C1) zur Leistungsfaktorkorrektur, wobei ein Eingangsanschluss des Spannungserfassungsmoduls (5) mit einem Ausgangsanschluss des PFC-Moduls (101) verbunden ist, um eine Ausgangsspannung des PFC-Moduls (101) zu erfassen; ein erster Anschluss des PFC-Kondensators (C1) mit dem Ausgangsanschluss des PFC-Moduls (101) verbunden ist und ein zweiter Anschluss des PFC-Kondensators (C1) mit einem Masseanschluss (GND) verbunden ist,
**dadurch gekennzeichnet, dass** das Spannungserfassungsmodul (5) einen ersten Widerstand (R1), einen zweiten Widerstand (R2) und einen Operationsverstärker (501) umfasst, wobei ein erster Anschluss des ersten Widerstands (R1) mit dem Ausgangsanschluss des PFC-Moduls (101) verbunden ist, ein zweiter Anschluss des ersten Widerstands (R1) mit einem ersten Anschluss des zweiten Widerstands (R2) verbunden ist und ein zweiter Anschluss des zweiten Widerstands (R2) mit dem Masseanschluss (GND) verbunden ist; ein mit dem zweiten Widerstand (R2) verbundener Anschluss des ersten Widerstands (R1) mit einem negativen Eingangsanschluss des Operationsverstärkers (501) verbunden ist, ein Ausgangsanschluss des Operationsverstärkers (501) mit dem Mikrocontroller (6) verbunden ist, wobei VSENSE=VOUTxR2/(Rl+R2), wobei VSENSE eine vom Spannungserfassungsmodul (5) erfasste Ausgangsspannung ist, VOUT die Ausgangsspannung des PFC-Moduls (101) ist, R1 und R2 die Widerstandswerte des ersten Widerstands (R1) und des zweiten Widerstands (R2) sind,
wobei ein fünfter Widerstand (R5) zwischen den positiven Eingangsanschluss und den Ausgangsanschluss des Operationsverstärkers (501) geschaltet ist und ein sechster Widerstand (R6) zwischen den Ausgangsanschluss des Operationsverstärkers (501) und den Mikrocontroller (6) geschaltet ist, ein positiver Eingangsanschluss des Operationsverstärkers (501) mit einer Referenzspannungsteilerschaltung verbunden ist, wobei die Referenzspannungsteilerschaltung dazu dient, eine Referenzspannung bereitzustellen, und die Referenzspannungsteilerschaltung einen dritten Widerstand (R3) und einen vierten Widerstand (R4) umfasst, wobei ein erster Anschluss des dritten Widerstands (R3) mit einem positiven Anschluss der externen Stromversorgung (4) verbunden ist, ein zweiter Anschluss des dritten Widerstands (R3) mit einem ersten Anschluss des vierten Widerstands (R4) verbunden ist, ein zweiter Anschluss des vierten Widerstands (R4) mit dem Masseanschluss (GND) verbunden ist und ein Anschluss des dritten Widerstands (R3), der mit dem vierten Widerstand (R4) verbunden ist, mit dem positiven Eingangsanschluss des Operationsverstärkers (501) verbunden ist, wobei VREF=VCCxR4/(R3+R4), wobei VREF die Referenzspannung ist, VCC eine positive Anschlussspannung der externen Stromversorgung (4) ist, R3 und R4 die Widerstandswerte des dritten Widerstands (R3) und des vierten Widerstands (R4) sind.

2. Schaltung zum Unterdrücken eines Einschaltstromstoßes einer Stromversorgung nach Anspruch 1, die ferner umfasst: einen Transistor (7), von dem ein Eingangsanschluss mit einem Ausgangsanschluss des Mikrocontrollers (6) verbunden ist und von dem ein Ausgangsanschluss mit einem Eingangsanschluss des Relais (2) verbunden ist, wobei der Mikrocontroller (6) konfiguriert ist, um das Einschalten und Ausschalten des Transistors (7) auf der Grundlage des Erfassungsergebnisses des Spannungserfassungsmoduls (5) zu steuern, wodurch gesteuert wird, ob das Relais (2) aktiviert wird und ob der variable Widerstand (3) mit dem Stromversorgungskreis von der externen Stromversorgung (4) zum Stromversorgungsmodul (1) verbunden wird.

3. Schaltung zum Unterdrücken eines Einschaltstromstoßes einer Stromversorgung nach Anspruch 2, bei der der Mikrocontroller (6) konfiguriert ist, um: das Einschalten des Transistors (7) zu steuern, das Einschalten des Relais (2) zu treiben und den variablen Widerstand (3) kurzzuschließen, so dass das Stromversorgungsmodul (1) eine Spannung der externen Stromversorgung (4) bei voller Leistung ausgibt, wenn die Ausgangsspannung des Stromversorgungsmoduls (1) höher als eine Referenzspannung ist; und das Ausschalten des Transistors (7) zu steuern und das Ausschalten des Relais (2) zu treiben, so dass eine Eingangsspannung der externen Stromversorgung (4) über den variablen Widerstand (3) in das Stromversorgungsmodul (1) eingespeist wird, wenn die Ausgangsspannung des Stromversorgungsmoduls (1) niedriger als die Referenzspannung ist.

4. Schaltung zum Unterdrücken eines Einschaltstromstoßes einer Stromversorgung nach Anspruch 2, bei der der Transistor (7) eine Triode ist, wobei eine Basis der Triode mit dem Mikrocontroller (6) verbunden ist, ein Kollektor der Triode mit dem positiven Anschluss der externen Stromversorgung (4) verbunden ist und ein Emitter der Triode mit dem Relais (2) verbunden ist.

5. Schaltung zum Unterdrücken eines Einschaltstromstoßes einer Stromversorgung nach Anspruch 2, bei der der Transistor (7) ein Feldeffekttransistor ist, ein Gate des Feldeffekttransistors mit dem Mikrocontroller (6) verbunden ist, ein Drain des Feldeffekttransistors mit dem positiven Anschluss der externen Stromversorgung (4) verbunden ist und eine Source des Feldeffekttransistors mit dem Relais (2) verbunden ist.

6. Schaltung zum Unterdrücken eines Einschaltstromstoßes einer Stromversorgung nach einem der Ansprüche 2 bis 5, bei der der Mikrocontroller (6) ein Einchip-Mikrocomputer ist.

7. Schaltung zum Unterdrücken eines Einschaltstromstoßes einer Stromversorgung nach Anspruch 1, bei der der Widerstandseinstellbereich des variablen Widerstands (3) 5Ω-10 Ω beträgt;
ein Überspannungsschutzwert der Schaltung durch Einstellen des variablen Widerstands (3) variiert wird und der Überspannungsschutzwert kleiner oder gleich 44 A ist;
eine Überspannungsdauer der Schaltung kleiner oder gleich 4 s ist.

8. Ladegerät, umfassend: eine Schaltung zum Unterdrücken eines Einschaltstromstoßes nach einem der Ansprüche 1 bis 7.

9. Verfahren zum Unterdrücken eines Einschaltstromstoßes, das auf die Schaltung zum Unterdrücken eines Einschaltstromstoßes nach einem der Ansprüche 2 bis 7 angewendet wird, mit den Schritten: Erfassen einer Ausgangsspannung des Stromversorgungsmoduls (1) durch das Spannungserfassungsmodul (5); Steuern durch den Mikrocontroller (6), ob das Relais (2) aktiviert wird, auf der Grundlage eines Erfassungsergebnisses des Spannungserfassungsmoduls (5), und Steuern, ob der variable Widerstand (3) mit einer Stromversorgungsschaltung von der externen Stromversorgung (4) zum Stromversorgungsmodul (1) verbunden ist.

10. Verfahren zum Unterdrücken eines Einschaltstromstoßes einer Stromversorgung nach Anspruch 9, das ferner umfasst: Steuern des Ein- und Ausschaltens des Transistors (7) durch den Mikrocontroller (6) auf der Grundlage des Erfassungsergebnisses des Spannungserfassungsmoduls (5) und Steuern, ob das Relais (2) aktiviert wird und ob der variable Widerstand (3) mit einer Stromversorgungsschaltung von der externen Stromversorgung (4) zum Stromversorgungsmodul (1) verbunden wird.

11. Verfahren zum Unterdrücken eines Einschaltstromstoßes einer Stromversorgung nach Anspruch 10, das ferner umfasst: Steuern des einzuschaltenden Transistors (7) durch den Mikrocontroller (6), Treiben des einzuschaltenden Relais (2) und Kurzschließen des variablen Widerstands (3), so dass das Stromversorgungsmodul (1) eine Spannung der externen Stromversorgung (4) bei voller Leistung ausgibt, wenn eine Ausgangsspannung des Stromversorgungsmoduls (1) höher als eine Referenzspannung ist; und Steuern des auszuschaltenden Transistors (7) durch den Mikrocontroller (6) und Treiben des auszuschaltenden Relais (2), so dass eine Eingangsspannung der externen Stromversorgung (4) über den variablen Widerstand (3) in das Stromversorgungsmodul (1) eingespeist wird, wenn die Ausgangsspannung des Stromversorgungsmoduls (1) niedriger als die Referenzspannung ist.

## Revendications

1. Circuit pour supprimer une surtension de démarrage d'alimentation électrique, incluant : un module d'alimentation électrique (1), un relais (2), une résistance variable (3), un module de détection de tension (5) et un micro-contrôleur (6), dans lequel le relais (2) est connecté en parallèle à la résistance variable (3), puis connecté entre une alimentation électrique externe (4) et le module d'alimentation électrique (1), dans lequel une borne d'entrée du module de détection de tension (5) est connectée à une borne de sortie du module d'alimentation électrique (1) pour détecter une tension de sortie du module d'alimentation électrique (1) ; une borne d'entrée du micro-contrôleur (6) est connectée à une borne de sortie du module de détection de tension (5), et le micro-contrôleur (6) est configuré pour commander l'activation ou non du relais (2) sur la base d'un résultat de détection du module de détection de tension (5), en contrôlant ainsi si la résistance variable (3) est connectée à un circuit d'alimentation électrique de l'alimentation électrique externe (4) au module d'alimentation électrique (1),
dans lequel le module d'alimentation électrique (1) inclut : un module PFC (101) et un condensateur PFC (C1) pour une correction de facteur de puissance, dans lequel une borne d'entrée du module de détection de tension (5) est connectée à une borne de sortie du module PFC (101) pour détecter une tension de sortie du module PFC (101) ; une première borne du condensateur PFC (C1) est connectée à la borne de sortie du module PFC (101), et une seconde borne du condensateur PFC (C1) est connectée à une borne de masse (GND), **caractérisé en ce que** le module de détection de tension (5) inclut : une première résistance (R1), une deuxième résistance (R2) et un amplificateur opérationnel (501), dans lequel une première borne de la première résistance (R1) est connectée à la borne de sortie du module PFC (101), une seconde borne de la première résistance (R1) est connectée à une première borne de la deuxième résistance (R2) et une seconde borne de la deuxième résistance (R2) est connectée à la borne de masse (GND) ; une borne de la première résistance (R1) connectée à la deuxième résistance (R2) est connectée à une borne d'entrée négative de l'amplificateur opérationnel (501), une borne de sortie de l'amplificateur opérationnel (501) est connectée au microcontrôleur (6), dans lequel VSENSE = VOUT x R2/(R1 + R2), où VSENSE est une tension de sortie détectée par le module de détection de tension (5), VOUT est la tension de sortie du module PFC (101), R1 et R2 sont la valeur de résistance de la première résistance (R1) et de la deuxième résistance (R2),
dans lequel une cinquième résistance (R5) est connectée entre la borne d'entrée positive et la borne de sortie de l'amplificateur opérationnel (501), et une sixième résistance (R6) est connectée entre la borne de sortie de l'amplificateur opérationnel (501) et le microcontrôleur (6), une borne d'entrée positive de l'amplificateur opérationnel (501) est connectée à un circuit diviseur de tension de référence, dans lequel le circuit diviseur de tension de référence est utilisé pour fournir une tension de référence,
le circuit diviseur de tension de référence inclut : une troisième résistance (R3) et une quatrième résistance (R4), dans lesquelles une première borne de la troisième résistance (R3) est connectée à une borne positive de l'alimentation électrique externe (4), une seconde borne de la troisième résistance (R3) est connectée à une première borne de la quatrième résistance (R4), une seconde borne de la quatrième résistance (R4) est connectée à la borne de masse (GND), et une borne de la troisième résistance (R3) connectée à la quatrième résistance (R4) est connectée à la borne d'entrée positive de l'amplificateur opérationnel (501), dans lequel VREF = VCC x R4/(R3 + R4), où VREF est la tension de référence, VCC est une tension de borne positive de l'alimentation électrique externe (4), R3 et R4 sont une valeur de résistance de la troisième résistance (R3) et de la quatrième résistance (R4).

2. Circuit pour supprimer une surtension de démarrage d'alimentation électrique selon la revendication 1, comprenant en outre : un transistor (7), dont une borne d'entrée est connectée à une borne de sortie du microcontrôleur (6), et dont une borne de sortie est connectée à une borne d'entrée du relais (2), dans lequel le microcontrôleur (6) est configuré pour commander la mise sous tension et la mise hors tension du transistor (7) sur la base du résultat de détection du module de détection de tension (5), en contrôlant ainsi s'il faut activer le relais (2) et si la résistance variable (3) est connectée au circuit d'alimentation électrique depuis l'alimentation électrique externe (4) vers le module d'alimentation électrique (1).

3. Circuit pour supprimer une surtension de démarrage d'alimentation électrique selon la revendication 2, dans lequel le microcontrôleur (6) est configuré pour : commander le transistor (7) à mettre sous tensions, commander le relais (2) à mettre sous tension, et court-circuiter la résistance variable (3), de sorte que le module d'alimentation électrique (1) délivre en sortie une tension de l'alimentation électrique externe (4) à pleine puissance, dans un cas où la tension de sortie du module d'alimentation électrique (1) est supérieure à une tension de référence ; et contrôler le transistor (7) à mettre hors tension et contrôler le relais (2) à mettre hors tension, de sorte qu'une tension d'entrée de l'alimentation électrique externe (4) soit entrée dans le module d'alimentation électrique (1) à travers la résistance variable (3), dans un cas où la tension de sortie du module d'alimentation électrique (1) est inférieure à la tension de référence.

4. Circuit pour supprimer une surtension de démarrage d'alimentation électrique selon la revendication 2, dans lequel le transistor (7) est une triode, dans lequel une base de la triode est connectée au microcontrôleur (6), et un collecteur de la triode est connecté à la borne positive de l'alimentation électrique externe (4), et un émetteur de la triode est connecté au relais (2).

5. Circuit pour supprimer une surtension de démarrage d'alimentation électrique selon la revendication 2, dans lequel le transistor (7) est un transistor à effet de champ, dans lequel une grille du transistor à effet de champ est connectée au microcontrôleur (6), et un drain du transistor à effet de champ est connecté à la borne positive de l'alimentation électrique externe (4), et une source du transistor à effet de champ est connectée au relais (2).

6. Circuit pour supprimer une surtension de démarrage d'alimentation électrique selon l'une quelconque des revendications 2 à 5, dans lequel le microcontrôleur (6) est un microordinateur monopuce.

7. Circuit pour supprimer une surtension de démarrage d'alimentation électrique selon la revendication 1, dans lequel la plage d'ajustement de résistance de la résistance variable (3) est de 5 Ω à 10 Ω ;
une valeur de suppression de surtension du circuit est modifiée en ajustant la résistance variable (3), et la valeur de suppression de surtension est inférieure ou égale à 44 A ;
une durée de surtension du circuit est inférieure ou égale à 4 s.

8. Appareil de charge, incluant : un circuit pour supprimer une surtension de démarrage d'alimentation électrique selon l'une quelconque des revendications 1 à 7.

9. Procédé pour supprimer une surtension de démarrage d'alimentation électrique appliquée au circuit pour supprimer une surtension de démarrage d'alimentation électrique selon l'une quelconque des revendications 2 à 7, incluant : la détection, par le module de détection de tension (5), d'une tension de sortie du module d'alimentation électrique (1) ; le contrôle, par le microcontrôleur (6), de l'activation ou non du relais (2) sur la base d'un résultat de détection du module de détection de tension (5), et le contrôle de la connexion ou non de la résistance variable (3) à un circuit d'alimentation électrique depuis l'alimentation électrique externe (4) vers le module d'alimentation électrique (1).

10. Procédé pour supprimer une surtension de démarrage d'alimentation électrique selon la revendication 9, comprenant en outre : le contrôle, par le microcontrôleur (6), de la mise sous tension et de la mise hors tension du transistor (7) selon le résultat de détection du module de détection de tension (5), et le contrôle de l'activation ou non du relais (2), et de la connexion ou non de la résistance variable (3) au circuit d'alimentation électrique depuis l'alimentation électrique externe (4) vers le module d'alimentation électrique (1).

11. Procédé pour supprimer une surtension de démarrage d'alimentation électrique selon la revendication 10, incluant en outre : le contrôle, par le microcontrôleur (6), du transistor (7) à mettre sous tension, la commande du relais (2) à mettre sous tension, et la mise en court-circuit de la résistance variable (3), de sorte que le module d'alimentation électrique (1) délivre en sortie une tension de l'alimentation électrique externe (4) à pleine puissance, dans un cas où une tension de sortie du module d'alimentation électrique (1) est supérieure à une tension de référence ; et le contrôle, par le microcontrôleur (6), du transistor (7) à mettre hors tension et le contrôle du relais (2) à mettre hors tension, de sorte qu'une tension d'entrée de l'alimentation électrique externe (4) soit entrée à travers la résistance variable (3) dans le module d'alimentation électrique (1), dans un cas où la tension de sortie du module d'alimentation électrique (1) est inférieure à la tension de référence.
